# EUROPEAN PATENT SPECIFICATION

(11) **EP 4 254 210 B1**
(45) Date of publication and mention of the grant of the patent: **19.02.2025**
(21) Application number: 22165725.7
(22) Date of filing: 31.03.2022
(51) Int. Cl.: G06F 13/40, G06F 13/42

(54) **POSITION DETERMINATION ARRANGEMENT**
POSITIONSBESTIMMUNGSANORDNUNG
AGENCEMENT DE DÉTERMINATION DE POSITION

(43) Date of publication of application: 04.10.2023
(73) Proprietor: Continental Automotive Technologies GmbH, 30175 Hannover (DE)
(72) Inventor: Buljovcic, Dalibor, 81737 München (DE)
(74) Representative: Continental Corporation

(56) References cited:
- WO-A1-2020/161282
- US-A1- 2004 078 097

## Description

The current invention relates to a position determination arrangement, in particular to an arrangement for determining the position of an electronic unit in a vehicle.

Document WO 2020/161282 A1 discloses a circuit for controlling one or more ultrasonic transducers and/or one or more ultrasonic transmitters and/or one or more ultrasonic receivers. The circuit comprises various means for determining the application in which the ultrasonic transducer or the ultrasonic transmitter or the ultrasonic receiver is being used. A sensor can determine, for example, whether the bus addresses are determined by means of connector coding or by means of a daisy-chain-like method.

Most vehicles today include a plurality of control units, processing units, sensors, and other electronic units. In order to ensure the correct function of an electronic unit and the correct processing of any data provided by an electronic unit, it may be necessary that the electronic unit and its position in the vehicle are correctly determined and identified.

There is a need to provide an arrangement with which an electronic unit can be identified and with which its position in the vehicle can be determined.

This problem is solved by an arrangement according to claim 1. Configurations and further developments of the invention are the subject of the dependent claims.

An arrangement includes a master unit including a first output and a second output, and being configured to provide a first potential at the first output, and a second potential at the second output, wherein the second potential is different from the first potential; a first slave unit and an identical second slave unit, each of the first and second slave units including a first input, a second input, and a polarity determination unit; and a bus line coupled to the master unit, the first lave unit, and the second slave unit, wherein the first input of the first slave unit is coupled to the first output, and the second input of the first slave unit is coupled to the second output of the master unit, the first input of the second slave unit is coupled to the second output, and the second input of the second slave unit is coupled to the first output of the master unit, the polarity detection unit of the first slave unit is configured to determine which potential is provided at which input of the first slave unit, and to output a corresponding polarity signal having a first state via the bus line, and the polarity detection unit of the second slave unit is configured to determine which potential is provided at which input of the second slave unit, and to output a corresponding polarity signal having a second state via the bus line.

In this way, the slave units are interchangeable without the necessity of any adaptions or adjustments to the arrangement. No elaborate software implementation is needed to identify each of the slave units. Further, the risk of mounting a slave unit in an incorrect position is reduced, as each slave unit may be mounted in any position.

The master unit may be configured to identify each of the first slave unit and the second slave unit based on the respective polarity signal received via the bus line.

This allows to clearly identify which slave unit is arranged at which position, e.g., in or on an object.

Each of the first slave unit and the second slave unit may further include a functional unit configured to perform a main function of the respective slave unit, and a rectifier unit arranged between the polarity determination unit and the functional unit, and configured to rectify a voltage received via the first and second inputs, irrespective of the polarity provided to each input and to provide the rectified voltage to the functional unit.

This allows to provide the functional unit, which performs the main function of the slave unit, with the correct operating voltage, irrespective of which potential is received at which input.

A main function of each of the first slave unit and the second slave unit may be to send and receive signals.

Transceiver units that are configured to send and receive signals are often used, e.g., with respect to certain objects. Transceiver units are often needed for functions for which a knowledge of the exact position of the transceiver unit in or on the object is cruicial.

The master unit, the first slave unit and the second slave unit may be arranged in or on an object, wherein each polarity signal uniquely defines a position of the respective slave unit in or on the object.

The object may be a vehicle, a building, a door, a gate, a barrier, or a movable blocking arrangement.

Each of the first slave unit and the second slave unit may include one or more sensors, wherein each of the one or more sensors is configured to detect two different states, and the state detected by one or a combination of states detected by more than one sensor is assigned to a specific position of the respective slave unit in or on the object.

This is a way to confirm or further define the position of the slave unit in or on the vehicle.

Each of the slave units may be mounted to a different mounting surface in or on the object.

Each of the one or more sensors of each slave unit may be arranged at a defined position on the mounting surface, wherein the mounting surface, at the positions of the one or more sensors, comprises one of two different properties.

In this way, each sensor, at its position, may detect one of the two possible properties, and therefore one of the two possible states.

Each of the one or more sensors may include a Hall sensor, a capacitive sensor, or an optical sensor.

Each such sensor may detect different properties. For example, a metallic surface may be distinguished from a non-metallic surface, or any other different markings or properties may be detected at the positions of the sensors which result in one of two possible states.

Examples are now explained with reference to the drawings. In the drawings the same reference characters denote like features.
Figure 1 schematically illustrates a system configured to determine the position of an electronic device with respect to a vehicle.
Figure 2 schematically illustrates a vehicle including a plurality of electronic units.
Figure 3 schematically illustrates in a block diagram a conventional arrangement comprising a master unit and slave units.
Figure 4 schematically illustrates in a block diagram an arrangement comprising a master unit and slave units according to one example.
Figure 5 schematically illustrates in a block diagram a slave unit according to one example.
Figure 6 schematically illustrates in a circuit diagram sub-units of a slave unit according to one example.
Figure 7 schematically illustrates different polarity signals that may be output by a slave unit according to one example.
Figure 8 schematically illustrates in a table an example of different sensor measurement results and corresponding positions in a vehicle.
Figure 9 , including Figures 9A and 9B, schematically illustrates sensor arrangements for determining a position of a slave unit according to different examples.

In the following Figures, only such elements are illustrated that are useful for the understanding of the present invention. The arrangement and its components described below may comprise more than the exemplary elements illustrated in the Figures. However, any additional elements that are not needed for the implementation of the present invention have been omitted for the sake of clarity.

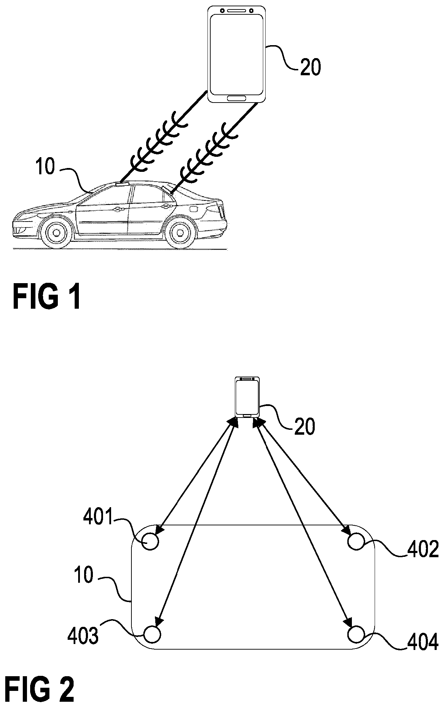

Figure 1 schematically illustrates an electronic device 20 and a vehicle 10. The electronic device 20 may be an electronic vehicle key or any other electronic device (e.g., smartphone, tablet, laptop, etc.) which may function as a vehicle key, for example. The electronic device 20 communicates wirelessly with the vehicle 10.

For many applications, the exact position of the electronic device 20 with respect to the vehicle 10 needs to be known. For example, it may be required that the electronic device 20 is located inside of the vehicle 10 in order to be able to start the vehicle 10. It may also be necessary that the electronic device 20 is located in a defined area around the vehicle 10 in order to be able to unlock the vehicle 10. For an automatic parking control, for example, which automatically performs a parking process, it may be necessary that a user carrying the electronic device 20 is detected inside a defined radius (e.g., 6 meters) around the vehicle 10 for him to be able to supervise the automatic parking process. These are only a few examples of functions which require an exact knowledge of the position of an electronic device 20 with respect to a vehicle 10.

The position of an electronic device 20 with respect to a vehicle 10 may be determined, e.g., by means of signals that are sent between the vehicle 10 and the electronic device 20. A plurality of transceiver devices 401, 402, 403, 404 may be arranged in different positions in or on the vehicle 10, as is schematically illustrated in Figure 2. The transceiver devices 401, 402, 403, 404 send out signals which are received by the electronic device 20. The electronic device 20 then answers the signals with one or more response signals. The position of the electronic device 20 may then be determined by evaluating the time between sending out the signals from the transceiver devices 401, 402, 403, 404 and receiving them in the electronic device 20 and/or between sending out the response signals from the electronic device 20 and receiving them in the respective transceiver device 401, 402, 403, 404 (generally known as two-way ranging TWR). Other possibilities for determining the position of the electronic device 20 are, e.g., time-difference of arrival (TDoA) or phase-difference of arrival (PDoA).

In Figure 2, four transceiver units 401, 402, 403, 404 are exemplarily illustrated. It is, however, possible, that less than four or more than four transceiver units 401, 402, 403, 404 are arranged in or on the vehicle 10.

When the time between sending out a signal from a transceiver unit 401, 402, 403, 404 and receiving the signal in the electronic device 20 (and/or vice versa) is known, the distance between the electronic device 20 and the respective transceiver unit 401, 402, 403, 404 may be determined. It is, alternatively or additionally, also possible to determine the distance by means of the received signal strength, which decreases depending on the distance from the respective transceiver unit 401, 402, 403, 404. When the distance between the electronic device 20 and each of the transceiver units 401, 402, 403, 404 is known, the position of the electronic device 20 with respect to the vehicle 10 may be determined, e.g., by means of suitable trilateration or multilateration methods.

However, in order to be able to determine the exact position of the electronic device 20 with respect to the vehicle 10, it is essential that the exact position of each transceiver unit 401, 402, 403, 404 within the vehicle 10 be known. For example, it needs to be known, whether a transceiver unit 401, 402, 403, 404 is arranged, e.g., in a front left position, rear right position, etc.

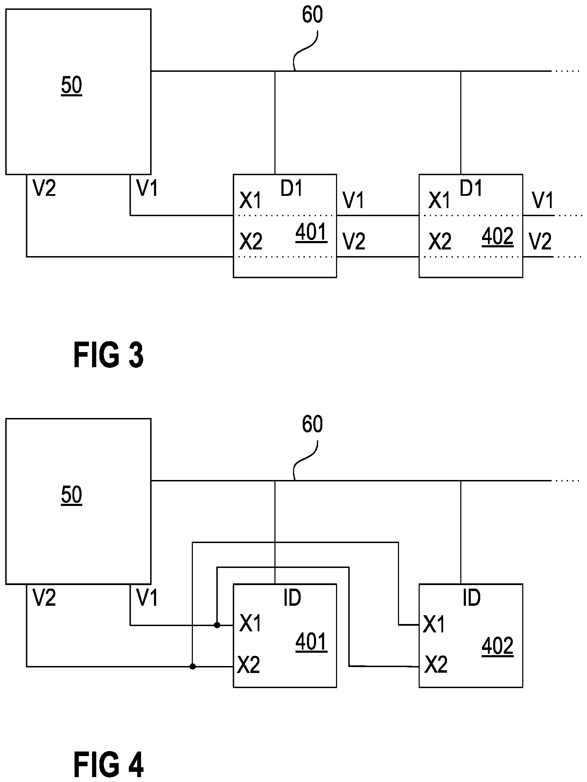

In known arrangements, as is schematically illustrated in Figure 3, a plurality of transceiver units 401, 402, also generally referred to as slave units in the following, is connected to a master unit 50. The master unit 50 may be any kind of controller unit, for example. The master unit 50 is configured to provide an operating voltage to the slave units 401, 402. Each slave unit 401, 402 comprises a first input X1 and a second input X2. In conventional arrangements, as is exemplarily illustrated in Figure 3, the slave units 401, 402 are often connected in series to each other. That is, the first input X1 of a first slave unit 401 is coupled to a first output V1 of the master unit 50, and the second input X2 of the first slave unit 401 is coupled to a second output V2 of the master unit 50. A first potential (e.g., a positive potential) is provided at the first output V1, and a second potential (e.g., a negative or ground potential) is provided at the second output V2 of the master unit 50. That is, the first slave unit 401 receives the first potential at its first input X1, and the second potential at its second input X2. The second slave unit 402 is connected in series to the first slave unit 401. That is, the first potential and the second potential are provided to the second slave unit 402 through the first slave unit 401. The second slave unit 402 also receives the first potential at its first input X1, and the second potential at its second input X2, similar to what has been explained with respect to the first slave unit 401. Any number of additional slave units 40n may be connected in series to the first and the second slave unit 401, 402 in a similar fashion. In conventional arrangements, each slave unit 401, 402 may identify itself to the master unit 50 by sending a unique identification (ID) via a bus line 60. This, however, requires a specific software implementation, in order to assign a specific ID to each of the slave units 401, 402.

Therefore, according to the invention, identification of a slave unit 401, 402 is implemented in a different way. This is schematically illustrated in Figure 4. The first slave unit 401 in Figure 4 is coupled to the master unit 50 in the same way as has been described with respect to Figure 3 above. The second slave unit 402 is identical to the first slave unit 401. That is, the second slave unit 402 comprises the exact same terminal pins and the exact same internal wiring as the first slave unit 401. In this way, the first slave unit 401 and the second slave unit 402 are interchangeable. However, the first input X1 of the second slave unit 402 is not coupled to the first output V1 of the master unit 50, but to the second output V2 instead. The second input X2 of the second slave unit 402, on the other hand, is coupled to the first output V1. That is, the first slave unit 401 receives the first potential at its first input X1, and the second potential at its second input X2, and the second slave unit 402 receives the second potential at its first input X1 and the first potential at its second input X2.

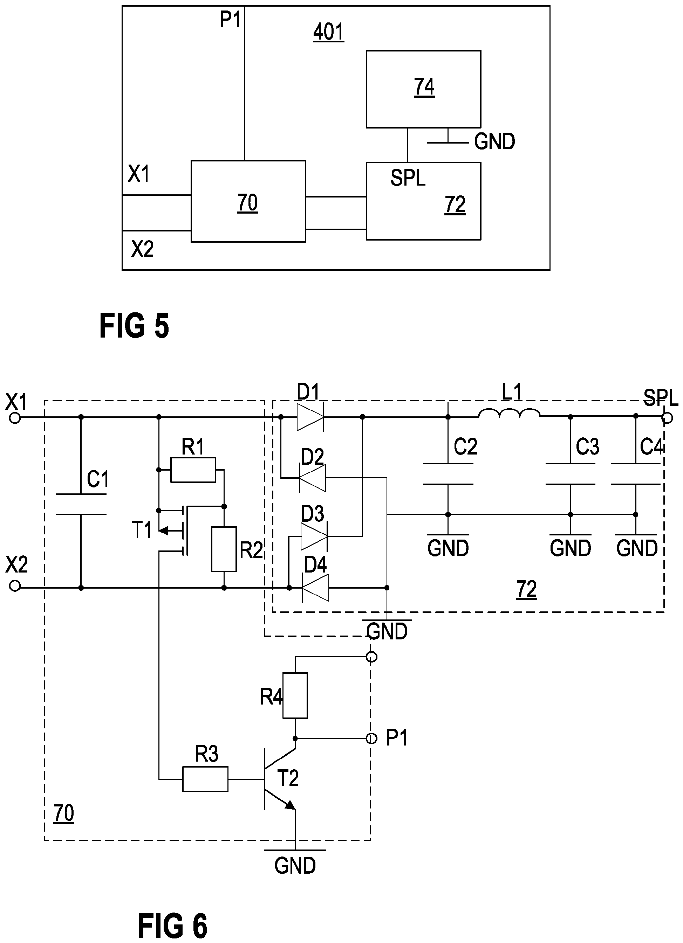

Now referring to Figure 5, each slave unit 40n comprises a polarity determination unit 70 which is configured to determine a polarity of the potential applied to each of the fist input X1 and the second input X2. The polarity determination unit 70, therefore, is able to detect which of the inputs X1, X2 receives the first potential and which of the inputs X1, X2 receives the second potential. The potential determination unit 70 is further configured to output a polarity signal P1. The polarity signal P1 is provided to the master unit 50 via the bus line 60. The bus line 60 may be any suitable bus line such as, e.g., CAN, LIN, FlexRay, etc.

Each slave unit 401 further comprises a functional unit 74 which performs the main function of the slave unit 401. If the slave unit 401 is a transceiver unit, for example, the functional unit 74 may be configured to send and receive signals. The main function of the slave unit 401 may be different if it is not a transceiver unit. In order to provide the functional unit 74 with the correct supply voltage, the slave unit 401 further comprises a rectifier unit 72 which is configured to rectify the supply voltage received via the first and second input X1, X2, irrespective of the actual polarity provided to each input X1, X2. That is, the rectifier unit 72 is arranged between the polarity determination unit 70 and the functional unit 74 and is configured to provide a correct operating voltage to the functional unit 74.

One example of a possible implementation of a polarity determination unit 70 and a rectifier unit 72 is schematically illustrated in Figure 6. The polarity determination unit 70 may comprise a first transistor T1, for example, comprising a load path between a first load terminal and a second load terminal. The first transistor T1 may be coupled to the first input X1 with its first load terminal. The first transistor T1 further comprises a control terminal which may be coupled to the first input X1 via a first resistor R1. The control terminal may further be coupled to the second input X2 via a second resistor R2. Depending on the polarity of the potentials provided to the inputs X1, X2, the first transistor T1 may be in a conducting, or a non-conducting state. This results in a different polarity signal P1 provided at a respective output of the polarity determination unit 70. The second load terminal of the first transistor T1 is coupled to the respective output in order to output the polarity signal P1. Additional components such as, e.g., additional resistors R3, R4 or transistors T2 may be coupled between the second load terminal of the first transistor T1 and the output, as is schematically illustrated in Figure 6, in order to provide a polarity signal having one of, e.g. two possible states.

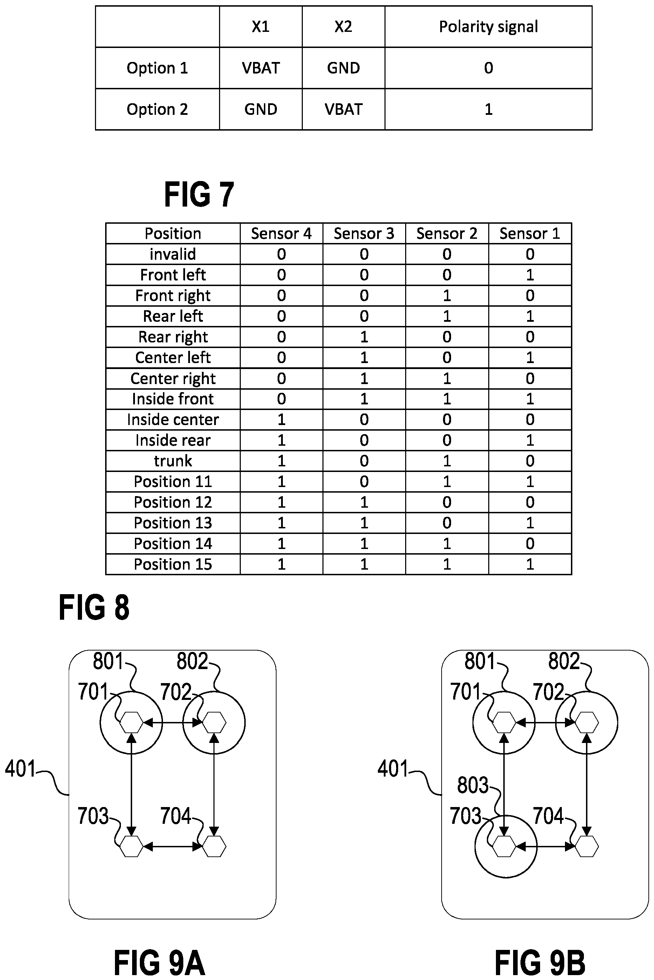

If, for example, the first input X1 receives a positive potential VBAT and the second input X2 receives a ground potential GND, a first polarity signal P1 = "0" may be output. If, on the other hand, the first input X1 receives a ground potential GND and the second input X2 receives a positive potential VBAT, a second polarity signal P1 = "1" which is different from the first polarity signal P1 = "0" is output. This is schematically illustrated in the table of Figure 7.

Still referring to Figure 6, the rectification unit 72 may comprise a plurality of diodes D1, D2, D3, D4, which are arranged and configured to rectify the voltage received at the inputs X1, X2. That is, the same voltage is provided at the output of the rectification unit 72, irrespective of whether the first potential is received at the first input X1 and the second potential is received at the second input X2, or vice versa. The rectification unit 72 may further comprise additional smoothing capacitors C2, C3, C4 and inductors L1, for example. The polarity determination unit 70, and the rectification unit 72, however, may be implemented in any other suitable way. The exact implementation is irrelevant for the function of the present invention. Figure 6 merely illustrates one example in which the invention may be implemented.

Each slave unit 40n may be trained when it is first coupled to the master unit 50. The slave units 40n, however, are identical to each other. That is, each slave unit 40n comprises the exact same inputs and outputs and the exact same internal wiring. The slave units 40n are interchangeable without the necessity of any adaptions or adjustments to the arrangement. No elaborate software implementation is needed to identify each of the slave units 40n. By identifying the slave units 40n in the described way by means of different wiring to the master unit 50, the slave units 40n are completely interchangeable. Further, the risk of mounting a slave unit 40n in an incorrect position is reduced, as each slave unit 401, 402, 403, 404 may be mounted in any position.

According to one example, a slave unit 40n arranged in a front right position of the vehicle 10 may always be connected to receive the first potential at its first input X1, and the second potential at its second input X2. A slave unit 40n arranged in a rear left position of the vehicle 10 may always be connected to receive the second potential at its first input X1, and the first potential at its second input X2. That is, in the given example, the first polarity signal P1 = "0" always identifies the front right position, while the second polarity signal P1 = "1" always identifies the rear left position. Any other positions in the vehicle may also be defined and identified in a similar way.

In the examples described above, two different potentials provided at two inputs X1, X2 of each slave unit 40n are used to identify the respective slave unit 40n. In this way, two different slave units 401, 402 may be distinguished. In a similar fashion, more than two slave units 40n may be clearly identified if more than two inputs Xn and/or more than two input signals (potentials) are used. It is also possible to distinguish more than two slave units, if each input X1, X2 of two inputs may assume three or even more different states. As has been described above, a first state may correspond to the first potential (e.g., positive potential VBAT), and a second state may correspond to the second potential (e.g., ground potential GND). A third possible state may be an open state (e.g., not connected), for example. In this way, 8 slave units 40n arranged in different positions in or on the vehicle 10 may be correctly identified.

The exact position (e.g., front right, rear left, etc.) of each slave unit 40n in the vehicle 10 additionally may be determined by means of a plurality of sensors 701, 702, 703, 704. In particular, each slave unit 40n may comprise a plurality of sensors 70n. Four sensors 701, 702, 703, 704 are exemplarily illustrated in the examples of Figures 9A and 9B. The exact number of sensors 70n, however, may depend on the number of slave units 40n and corresponding positions which need to be identified. Each sensor 701, 702, 703, 704 may be configured to detect one of two different states, e.g., "1" and "0". Depending on the number of sensors 70n of each slave unit 402, a certain number of different positions in the vehicle 10 may be uniquely identified.

In the table of Figure 8 this is schematically illustrated for the four sensors 701, 702, 703, 704 of Figure 9. If, for example, a state in which each of the plurality of sensors 701, 702, 703, 704 detects the same state, e.g., the second state "0", is considered as invalid, a total number of 15 different positions may be determined. As can be seen in the table of Figure 8, each combination of different states is associated with a specific position in the vehicle. For example, a slave unit 40n may be identified as a slave unit mounted in the position "rear left", if sensors 3 and 4 determine the second state "0", and sensors 1 and 2 determine the first state "1".

With a single sensor 701, two different positions may be determined, for example. With more than four sensors 70n, even more than 15 positions may be determined.

The different states detected by the sensors 70n may be generated in many different ways. Each slave unit 40n may be arranged on a corresponding mounting surface, for example. Each mounting surface may be arranged in a defined position in the vehicle 10 (e.g., front right, rear left, etc.). Each mounting surface at defined positions may comprise specific properties which may be detected by the sensors 70n. That is, each sensor 70n may be arranged in a dedicated position with respect to the mounting surface, when the slave unit 40n is arranged on the mounting surface.

According to one example, the mounting surface comprises a metallic surface. The metallic surface may comprise an opening or recess 80n at the position of at least one sensor 70n. This is schematically illustrated in Figure 9A for the position "rear left" of Figure 8. Each sensor 70n may comprise a Hall sensor, for example, which may detect whether the metallic surface or an opening 80n is arranged below the respective sensor 70n. A sensor 70n may detect the second state "0", for example, if the sensor 70n detects a metallic surface. A sensor 70n on the other hand may detect the first state "1", if an opening 80n is arranged below the respective sensor 70n. In this way, each mounting surface at each position in the vehicle 10 may be coded accordingly.

Figure 9B schematically illustrates an exemplary mounting surface for the position "inside front" of Figure 8. Only the fourth sensor 704 detects the second state "0", while all other sensors 701, 702, 703 detect the first state "1", as they are arranged above an opening 801, 802, 803 in the mounting surface.

Instead of openings 80n in a metallic surface, the mounting surface may also comprise any other suitable properties at the positions of the sensors 70n. For example, a non-metallic material may be arranged below the respective sensors 70n in specific positions instead of the openings 80n. It is also possible to vary the thickness of the mounting surface at the positions of the sensors 70n, wherein a sensor may detect the first state "1" if the mounting surface has a first thickness, and the second state "0" if the mounting surface has a second thickness. In this example, capacitive sensors may be used to detect the respective thickness, for example. It is also possible to use optical sensors 70n in order to detect specific patterns or colors at the positions of the sensors 70n, for example. Any other suitable implementation is also possible.

The arrangement and method have been described with respect to a vehicle 10 above. The vehicle 10 may be any kind of vehicle such as, e.g., a passenger car, a truck, a bus, a tractor, a motorbike, an airplane, a ship, etc. However, the invention is not restricted to arrangements arranged in a vehicle. The arrangement generally may be arranged in any kind of object for which it is required to know an exact position of electronic units arranged on or in the object. That is, the object may be any kind of building, door, gate, barrier, movable blocking arrangement, etc. It is also possible that electronic units (slave units) have other functions than transmitting and receiving signals. According to another example, the slave units may be light units or indicators on a vehicle.

### List of reference signs

- 10: vehicle
- 20: electronic device
- 40n: slave unit
- 50: master unit
- 60: bus line
- 70: polarity determination unit
- 72: rectifier unit
- 74: functional unit
- 70n: sensors
- 80n: openings
- X1, X2: inputs of slave units
- V1, V2: outputs of master unit
- P1: polarity signal
- T1, T2: transistors
- R1 -R4: resistors
- C1 - C4: capacitors
- D1 - D4: diodes

## Claims

1. An arrangement comprising
a master unit (50) comprising a first output (V1) and a second output (V2), and being configured to provide a first potential at the first output (V1), and a second potential at the second output (V2), wherein the second potential is different from the first potential;
a first slave unit (401) and an identical second slave unit (402), each of the first and second slave units (401, 402) comprising a first input (X1), a second input (X2), and a polarity determination unit (70); and
a bus line (60) coupled to the master unit (50), the first lave unit (401), and the second slave unit (402), wherein
the first input (X1) of the first slave unit (401) is coupled to the first output (V1), and the second input (X2) of the first slave unit (401) is coupled to the second output (V2) of the master unit (50), **characterized in that**
the first input (X1) of the second slave unit (402) is coupled to the second output (V2), and the second input (X2) of the second slave unit (402) is coupled to the first output (V1) of the master unit (50),
the polarity detection unit (70) of the first slave unit (401) is configured to determine which potential is provided at which input (X1, X2) of the first slave unit (401), and to output a corresponding polarity signal (P1) having a first state (1) via the bus line (60), and
the polarity detection unit (70) of the second slave unit (402) is configured to determine which potential is provided at which input (X1, X2) of the second slave unit (402), and to output a corresponding polarity signal (P1) having a second state (0) via the bus line (60).

2. The arrangement of claim 1, wherein the master unit (50) is configured to identify each of the first slave unit (401) and the second slave unit (402) based on the respective polarity signal (P1) received via the bus line (60).

3. The arrangement of claim 1 or 2, wherein each of the first slave unit (401) and the second slave unit (402) further comprises
a functional unit (74) configured to perform a main function of the respective slave unit (401, 402), and
a rectifier unit (72) arranged between the polarity determination unit (70) and the functional unit (74), and configured to rectify a voltage received via the first and second inputs (X1, X2), irrespective of the polarity provided to each input (X1, X2) and to provide the rectified voltage to the functional unit (74).

4. The arrangement of claim 4, wherein a main function of each of the first slave unit (401) and the second slave unit (402) is to send and receive signals.

5. The arrangement according to any of claims 1 to 4, wherein the master unit (50), the first slave unit (401) and the second slave unit (402) are arranged in or on an object (10), and wherein each polarity signal (P1) uniquely defines a position of the respective slave unit (401, 402) in or on the object (10).

6. The arrangement according to claim 5, wherein the object (10) is a vehicle, a building, a door, a gate, a barrier, or a movable blocking arrangement.

7. The arrangement of any of claims 5 or 6, wherein
each of the first slave unit (401) and the second slave unit (402) comprises one or more sensors (701. 702, 703, 704);
each of the one or more sensors (701, 702, 703, 704) is configured to detect two different states; and
the state detected by one or a combination of states detected by more than one sensor (701, 702, 703, 704) is assigned to a specific position of the respective slave unit (401, 402) in or on the object (10).

8. The arrangement of claim 7, wherein each of the slave units (401, 402) is mounted to a different mounting surface in or on the object (10).

9. The arrangement of claim 8, wherein each of the one or more sensors (701, 702, 703, 704) of each slave unit (401, 402) is arranged at a defined position on the mounting surface, and wherein the mounting surface, at the positions of the one or more sensors (701, 702, 703, 704), comprises one of two different properties.

10. The arrangement of any of claims 7 to 9, wherein each of the one or more sensors (701, 702, 703, 704) comprises a Hall sensor, a capacitive sensor, or an optical sensor.

## Patentansprüche

1. Anordnung, die aufweist
eine Master-Einheit (50), die einen ersten Ausgang (V1) und einen zweiten Ausgang (V2) aufweist und ausgebildet ist, um ein erstes Potential an dem ersten Ausgang (V1) und ein zweites Potential an dem zweiten Ausgang (V2) bereitzustellen, wobei sich das zweite Potential vom ersten Potential unterscheidet;
eine erste Slave-Einheit (401) und eine identische zweite Slave-Einheit (402), wobei jede der ersten und der zweiten Slave-Einheit (401, 402) einen ersten Eingang (X1), einen zweiten Eingang (X2) und eine Polaritätsbestimmungseinheit (70) aufweist; und
eine Busleitung (60), die mit der Master-Einheit (50), der ersten Slave-Einheit (401) und der zweiten Slave-Einheit (402) gekoppelt ist, wobei der erste Eingang (X1) der ersten Slave-Einheit (401) mit dem ersten Ausgang (V1) gekoppelt ist und der zweite Eingang (X2) der ersten Slave-Einheit (401) mit dem zweiten Ausgang (V2) der Master-Einheit (50) gekoppelt ist, **dadurch gekennzeichnet, dass**
der erste Eingang (X1) der zweiten Slave-Einheit (402) mit dem zweiten Ausgang (V2) gekoppelt ist und der zweite Eingang (X2) der zweiten Slave-Einheit (402) mit dem ersten Ausgang (V1) der Master-Einheit (50) gekoppelt ist,
die Polaritätsdetektionseinheit (70) der ersten Slave-Einheit (401) ausgebildet ist, um zu bestimmen, welches Potential an welchem Eingang (X1, X2) der ersten Slave-Einheit (401) bereitgestellt ist, und ein entsprechendes Polaritätssignal (P1) mit einem ersten Zustand (1) über die Busleitung (60) auszugeben, und
die Polaritätsdetektionseinheit (70) der zweiten Slave-Einheit (402) ausgebildet ist, um zu bestimmen, welches Potential an welchem Eingang (X1, X2) der zweiten Slave-Einheit (402) bereitgestellt wird, und ein entsprechendes Polaritätssignal (P1) mit einem zweiten Zustand (0) über die Busleitung (60) auszugeben.

2. Anordnung nach Anspruch 1, wobei die Master-Einheit (50) ausgebildet ist, um jede der ersten Slave-Einheit (401) und der zweiten Slave-Einheit (402) basierend auf dem jeweiligen Polaritätssignal (P1), das über die Busleitung (60) empfangen wird, zu identifizieren.

3. Anordnung nach Anspruch 1 oder 2, wobei jede der ersten Slave-Einheit (401) und der zweiten Slave-Einheit (402) ferner aufweist
eine Funktionseinheit (74), die ausgebildet ist, um eine Hauptfunktion der jeweiligen Slave-Einheit (401, 402) durchzuführen, und
eine Gleichrichtereinheit (72), die zwischen der Polaritätsbestimmungseinheit (70) und der Funktionseinheit (74) angeordnet und ausgebildet ist, um eine über den ersten und den zweiten Eingang (X1, X2) empfangene Spannung ungeachtet der Polarität, die jedem Eingang (X1, X2) bereitgestellt wird, gleichzurichten und die gleichgerichtete Spannung an die Funktionseinheit (74) bereitzustellen.

4. Anordnung nach Anspruch 4, wobei eine Hauptfunktion jeder der ersten Slave-Einheit (401) und der zweiten Slave-Einheit (402) darin besteht, Signale zu senden und zu empfangen.

5. Anordnung nach einem der Ansprüche 1 bis 4, wobei die Master-Einheit (50), die erste Slave-Einheit (401) und die zweite Slave-Einheit (402) in oder an einem Objekt (10) angeordnet sind und wobei jedes Polaritätssignal (P1) eine Position der jeweiligen Slave-Einheit (401, 402) in oder an dem Objekt (10) eindeutig definiert.

6. Anordnung nach Anspruch 5, wobei das Objekt (10) ein Fahrzeug, ein Gebäude, eine Tür, ein Tor, eine Barriere oder eine bewegliche Sperranordnung ist.

7. Anordnung nach einem der Ansprüche 5 oder 6, wobei jede der ersten Slave-Einheit (401) und der zweiten Slave-Einheit (402) einen oder mehrere Sensor(en) (701, 702, 703, 704) aufweist;
jeder des einen Sensors oder der mehreren Sensoren (701, 702, 703, 704) ausgebildet ist, um zwei unterschiedliche Zustände zu detektieren; und
der durch einen Sensor detektierte Zustand oder eine Kombination von durch mehr als einen Sensor (701, 702, 703, 704) detektierten Zuständen einer bestimmten Position der jeweiligen Slave-Einheit (401, 402) in oder an dem Objekt (10) zugewiesen ist.

8. Anordnung nach Anspruch 7, wobei jede der Slave-Einheiten (401, 402) an einer anderen Montagefläche in oder an dem Objekt (10) montiert ist.

9. Anordnung nach Anspruch 8, wobei jeder des einen Sensors oder der mehreren Sensoren (701, 702, 703, 704) jeder Slave-Einheit (401, 402) an einer definierten Position an der Montagefläche angeordnet ist und wobei die Montagefläche an den Positionen des einen Sensors oder der mehreren Sensoren (701, 702, 703, 704) eine von zwei unterschiedlichen Eigenschaften aufweist.

10. Anordnung nach einem der Ansprüche 7 bis 9, wobei jeder des einen Sensors oder der mehreren Sensoren (701, 702, 703, 704) einen Hall-Sensor, einen kapazitiven Sensor oder einen optischen Sensor aufweist.

## Revendications

1. Dispositif comprenant
une unité maîtresse (50) comprenant une première sortie (V1) et une deuxième sortie (V2), et configurée pour fournir un premier potentiel au niveau de la première sortie (V1), et un deuxième potentiel au niveau de la deuxième sortie (V2), le deuxième potentiel étant différent du premier potentiel ;
une première unité esclave (401) et une deuxième unité esclave identique (402), chacune des première et deuxième unités esclaves (401, 402) comprenant une première entrée (X1), une deuxième entrée (X2) et une unité de détermination de polarité (70) ; et
une ligne de bus (60) couplée à l'unité maîtresse (50), la première unité esclave (401) et la deuxième unité esclave (402), la
première entrée (X1) de la première unité esclave (401) étant couplée à la première sortie (V1) et la deuxième entrée (X2) de la première unité esclave (401) étant couplée à la deuxième sortie (V2) de l'unité maîtresse (50), **caractérisé en ce que**
la première entrée (X1) de la deuxième unité esclave (402) est couplée à la deuxième sortie (V2) et la deuxième entrée (X2) de la deuxième unité esclave (402) est couplée à la première sortie (V1) de l'unité maîtresse (50),
l'unité de détection de polarité (70) de la première unité esclave (401) est configurée pour déterminer quel potentiel est fourni à quelle entrée (X1, X2) de la première unité esclave (401) et pour émettre un signal de polarité correspondant (P1) ayant un premier état (1) via la ligne de bus (60), et
l'unité de détection de polarité (70) de la deuxième unité esclave (402) est configurée pour déterminer quel potentiel est fourni à quelle entrée (X1, X2) de la deuxième unité esclave (402) et pour émettre un signal de polarité correspondant (P1) ayant un deuxième état (0) via la ligne de bus (60).

2. Dispositif selon la revendication 1, dans lequel l'unité maîtresse (50) est configurée pour identifier chacune de la première unité esclave (401) et de la deuxième unité esclave (402) sur la base du signal de polarité (P1) respectif reçu via la ligne de bus (60).

3. Dispositif selon la revendication 1 ou 2, dans lequel chacune de la première unité esclave (401) et de la deuxième unité esclave (402) comprend en outre une unité fonctionnelle (74) configurée pour exécuter une fonction principale de l'unité esclave (401, 402) respective, et
une unité de redressement (72) disposée entre l'unité de détermination de polarité (70) et l'unité fonctionnelle (74) et configurée pour redresser une tension reçue via les première et deuxième entrées (X1, X2), quelle que soit la polarité fournie à chaque entrée (X1, X2), et pour fournir la tension redressée à l'unité fonctionnelle (74).

4. Dispositif selon la revendication 4, dans lequel une fonction principale de chacune de la première unité esclave (401) et de la deuxième unité esclave (402) est d'envoyer et de recevoir des signaux.

5. Dispositif selon l'une quelconque des revendications 1 à 4, dans lequel l'unité maîtresse (50), la première unité esclave (401) et la deuxième unité esclave (402) sont disposées dans ou sur un objet (10), et dans lequel chaque signal de polarité (P1) définit de manière unique une position de l'unité esclave (401, 402) respective dans ou sur l'objet (10).

6. Dispositif selon la revendication 5, dans lequel l'objet (10) est un véhicule, un bâtiment, une porte, une grille, une barrière ou un dispositif de blocage mobile.

7. Dispositif selon l'une quelconque des revendications 5 ou 6, dans lequel
chacune de la première unité esclave (401) et de la deuxième unité esclave (402) comprend un ou plusieurs capteurs (701, 702, 703, 704) ;
chacun des un ou plusieurs capteurs (701, 702, 703, 704) est configuré pour détecter deux états différents ; et
l'état détecté par un capteur ou une combinaison d'états détectée par plus d'un capteur (701, 702, 703, 704) est attribué à une position spécifique de l'unité esclave (401, 402) respective dans ou sur l'objet (10).

8. Dispositif selon la revendication 7, dans lequel chacune des unités esclaves (401, 402) est montée sur une surface de montage différente dans ou sur l'objet (10).

9. Dispositif selon la revendication 8, dans lequel chacun des un ou plusieurs capteurs (701, 702, 703, 704) de chaque unité esclave (401, 402) est disposé à une position définie sur la surface de montage, et dans lequel la surface de montage, aux positions des un ou plusieurs capteurs (701, 702, 703, 704), comprend l'une des deux propriétés différentes.

10. Dispositif selon l'une quelconque des revendications 7 à 9, dans lequel chacun des un ou plusieurs capteurs (701, 702, 703, 704) comprend un capteur à effet Hall, un capteur capacitif ou un un capteur optique.
